# EUROPÄISCHE PATENTANMELDUNG

(11) **EP 2 902 466 A1**
(43) Veröffentlichungstag der Anmeldung: **05.08.2015**
(21) Anmeldenummer: 14000395.5
(22) Anmeldetag: 04.02.2014
(51) Int. Cl.: C10J 3/80

(54) **Verfahren und Anlage zur Gewinnung von Oxygenaten mit Dampferzeugung**

(71) Anmelder: Linde Aktiengesellschaft, 80331 München (DE)
(72) Erfinder: Fritz, Helmut, 81375 München (DE); Bartesch, Thomas, 85625 Glonn (DE); Peschel, Andreas, Dr., 82515 Wolfratshausen (DE)

(57) **Zusammenfassung**

Es wird ein Verfahren zur Gewinnung wenigstens eines Oxygenats vorgeschlagen, bei dem in wenigstens einem Synthesegasreaktor (2) aus wenigstens einem Prozessdampfstrom (u) und wenigstens einem kohlenwasserstoffhaltigen Strom (b) wenigstens ein zumindest Wasser, Kohlenmonoxid und Wasserstoff enthaltender Rohgasstrom (c) gebildet wird, wobei aus wenigstens einem Teil des Wassers in dem wenigstens einen Rohgasstroms (c) wenigstens ein Kondensatstrom (o) gebildet wird und weitere Komponenten des Rohgasstroms (c) wenigstens teilweise in wenigstens einem Oxygenatreaktor (5) zu wenigstens einem Rohproduktstrom (g) umgesetzt werden, der das wenigstens eine Oxygenat enthält. Der wenigstens eine Oxygenatreaktor (5) wird unter Verwendung wenigstens eines Teils des wenigstens einen Kondensatstroms (o) gekühlt und bei der Kühlung des wenigstens eine Oxygenatreaktors (5) aus dem Wasser des wenigstens einen Kondensatstroms (o) gebildeter Dampf wird zumindest teilweise zur Bildung des wenigstens einen Prozessdampfstroms (u) verwendet. Eine entsprechende Anlage (100) ist ebenfalls Gegenstand der Erfindung.

## Beschreibung

Die Erfindung betrifft ein Verfahren und eine Anlage zur Gewinnung wenigstens eines Oxygenats gemäß den Oberbegriffen der unabhängigen Patentansprüche.

### Stand der Technik

Unter Oxygenaten werden sauerstoffhaltige, von gesättigten Kohlenwasserstoffen abgeleitete Verbindungen verstanden, insbesondere Ether und Alkohole. Oxygenate kommen beispielsweise als Kraftstoffadditive zur Erhöhung der Oktanzahl und als Bleiersatz zum Einsatz (vgl. D. Barceló (Hrsg.): Fuel Oxygenates. In: D. Barceló und A.G. Kostianoy (Hrsg.): The Handbook of Environmental Chemistry, Bd. 5. Heidelberg: Springer, 2007). Die Zugabe von Oxygenaten in Kraftstoffen bewirkt unter anderem eine sauberere Verbrennung im Motor und verringert damit Emissionen.

Bei entsprechenden Oxygenaten handelt es sich typischerweise um Ether und Alkohole. Neben Methyl-tert-butylether (MTBE, engl. methyl tertiary butyl ether) kommen beispielsweise tert-Amylmethylether (TAME, tertiary amyl methyl ether), tert-Amylethylether (TAEE, tertiary amyl ethyl ether), Ethyl-tert-butylether (ETBE, ethyl tertiary butyl ether) und Diisopropylether (DIPE, diisopropyl ether) zum Einsatz. Als Alkohole werden beispielsweise Methanol, Ethanol und tert-Butanol (TBA, tertiary butyl alcohol) verwendet. Zu den Oxygenaten zählt insbesondere auch der nachfolgend erläuterte Dimethylether (DME, dimethyl ether). Die Erfindung ist nicht auf die Herstellung der genannten Verbindungen beschränkt, sondern eignet sich in gleicher Weise zur Verwendung in Verfahren zur Herstellung anderer Oxygenate.

Bei Dimethylether handelt es sich um den strukturell einfachsten Ether. Dimethylether enthält zwei Methylgruppen als organische Reste. Dimethylether ist polar und findet herkömmlicherweise in flüssiger Form als Lösungsmittel Verwendung. Dimethylether kann ferner als Kühlmittel eingesetzt werden und beispielsweise herkömmliche Fluorchlorkohlenwasserstoffe ersetzen.

Neuerdings wird Dimethylether zunehmend als Ersatz für Brenngas (Flüssiggas) und herkömmliche Kraftstoffe wie Diesel eingesetzt. Aufgrund seiner vergleichsweise hohen Cetanzahl von 55 bis 60 müssen beispielsweise herkömmliche Dieselmotoren für den Betrieb mit Dimethylether nur geringfügig modifiziert werden. Dimethylether verbrennt vergleichsweise sauber und ohne Rußbildung. Wird Dimethylether aus Biomasse hergestellt, gilt er als sogenannter Biokraftstoff und kann daher steuerbegünstigt vermarktet werden.

Dimethylether kann entweder direkt aus Methanol oder indirekt aus Erd- oder Biogas erzeugt werden. Im letzteren Fall wird das Erd- oder Biogas zunächst zu Synthesegas reformiert. Synthesegas kann auch mittels anderer Verfahren, beispielsweise durch Pyrolyse von Abfällen oder Biomasse, gewonnen werden. Das Synthesegas wird klassischerweise zu Methanol und anschließend weiter zu Dimethylether umgesetzt. Die Gewinnung von Dimethylether aus Synthesegas ist thermodynamisch und wirtschaftlich vorteilhaft gegenüber einer Gewinnung aus Methanol.

Die vorliegende Erfindung erweist sich insbesondere als vorteilhaft bei der einstufigen oder direkten Gewinnung von Dimethylether aus Synthesegas. Unter einer einstufigen oder direkten Gewinnung wird hier eine Gewinnung ohne eine zwischengeschaltete Methanolabtrennung verstanden, wie sie in einer zweistufigen Gewinnung erfolgt. Die ablaufenden Reaktionen können jedoch auch in einer einstufigen Gewinnung Methanol als Zwischenprodukt umfassen, das jedoch in dem oder den verwendeten Reaktoren zumindest zum Teil weiter zu Dimethylether reagiert. Entsprechende Verfahren sind seit längerem bekannt und werden auch unten näher erläutert.

Bei der einstufigen oder direkten Gewinnung von Dimethylether, jedoch auch bei der Gewinnung anderer Oxygenate aus Synthesegas, kommen exotherme katalytische Reaktionen, beispielsweise in Rohrreaktoren, zum Einsatz. Gleichzeitig besteht bei diesen Prozessen der Bedarf nach Prozess-, Heiz- und/oder Druckdampf. Die in diesem Zusammenhang herkömmlicherweise eingesetzten Verfahren sind jedoch insbesondere aus energetischer Sicht nicht vollständig zufriedenstellend.

Es besteht daher der Bedarf nach entsprechenden Verbesserungen bei Verfahren und Anlagen zur Gewinnung von Oxygenaten wie Dimethylether.

### Offenbarung der Erfindung

Vor diesem Hintergrund schlägt die vorliegende Erfindung ein Verfahren und eine Anlage zur Gewinnung wenigstens eines Oxygenats mit den Merkmalen der jeweiligen unabhängigen Patentansprüche vor. Bevorzugte Ausgestaltungen sind Gegenstand der abhängigen Patentansprüche sowie der nachfolgenden Beschreibung.

Vor der Erläuterung der Merkmale und Vorteile der vorliegenden Erfindung werden deren Grundlagen und die verwendeten Begriffe erläutert.

Ein Fluid (die Bezeichnung Fluid wird nachfolgend auch kurz für entsprechende Ströme, Fraktionen usw. verwendet) ist von einem anderen Fluid (das hier auch als Ausgangsfluid bezeichnet wird) abgeleitet oder aus einem solchen Fluid gebildet, wenn es zumindest einige in dem Ausgangsfluid enthaltene oder aus diesem erhaltene Komponenten aufweist. Ein in diesem Sinne abgeleitetes bzw. gebildetes Fluid kann aus dem Ausgangsfluid durch Abtrennen oder Abzweigen eines Anteils oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen und dergleichen erhalten bzw. gebildet werden. Ein Strom kann auch beispielsweise einfach dadurch gebildet werden, dass er aus einem Speicherbehälter abgezogen wird.

Fluide können im hier verwendeten Sprachgebrauch reich oder arm an einer oder mehreren enthaltenen Komponenten sein, wobei reich für einen Gehalt von wenigstens 90%, 95%, 99%, 99,5%, 99,9%, 99,99% oder 99,999% und arm für einen Gehalt von höchstens 10%, 5%, 1%, 0,1 %, 0,01% oder 0,001 % auf molarer, Gewichts- oder Volumenbasis stehen kann. Sie können im hier verwendeten Sprachgebrauch angereichert oder abgereichert an einer oder mehreren Komponenten sein, wobei sich diese Begriffe auf einen entsprechenden Gehalt in einem Ausgangsfluid beziehen, aus dem das Fluid gebildet wurde. Das Fluid ist angereichert, wenn es zumindest den 1,1-fachen, 1,5-fachen, 2-fachen, 5-fachen, 10-fachen, 100-fachen oder 1.000-fachen Gehalt, abgereichert, wenn es höchstens den 0,9-fachen, 0,5-fachen, 0,1-fachen, 0,01-fachen oder 0,001-fachen Gehalt einer entsprechenden Komponente, bezogen auf das Ausgangsfluid, enthält. Ein überwiegend eine oder mehrere Komponenten enthaltendes Fluid enthält diese eine oder mehreren Komponenten zu wenigstens 90%, 95%, 98% oder 99% bzw. ist reich an diesen.

Nachfolgend werden zur Charakterisierung von Drücken und Temperaturen die Begriffe Druckniveau und Temperaturniveau verwendet, wodurch zum Ausdruck gebracht werden soll, dass Drücke und Temperaturen nicht in Form exakter Druck- bzw. Temperaturwerte verwendet werden müssen, um ein erfinderisches Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Unterschiedliche Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste, beispielsweise aufgrund von Abkühlungseffekten, ein. Entsprechendes gilt für Temperaturniveaus. Bei den hier in bar angegebenen Druckniveaus handelt es sich um Absolutdrücke.

Ist nachfolgend kurz von einer Gewinnung von Dimethylether oder wenigstens eines Oxygenats die Rede, wird hierunter ein Verfahren verstanden, bei dem ein zumindest die bekannten Komponenten von Synthesegas enthaltender Einsatz, also ein Gasgemisch, das in geeigneten Anteilen zumindest Kohlenmonoxid und Wasserstoff enthält, zu einem Dimethylether enthaltenden Produktstrom umgesetzt wird. Ein entsprechender Produktstrom enthält aufgrund der nicht vollständigen Reaktion und aufgrund des Auftretens von Nebenreaktionen bei der Synthese von Dimethylether, insbesondere in Abhängigkeit von den Charakteristika der verwendeten Katalysatoren und den jeweiligen Gehalten der Komponenten des Synthesegases, nicht ausschließlich Dimethylether sondern auch weitere Verbindungen. Diese sind zumindest Methanol, Wasser, Kohlendioxid, Kohlenmonoxid und Wasserstoff, jedoch auch geringere Mengen an Methan, Ethan, organischen Säuren, Stickstoff und höheren Alkoholen. Diese weiteren Verbindungen müssen zumindest teilweise abgetrennt werden, um einerseits nachfolgende Trennschritte zu ermöglichen und andererseits Dimethylether in der jeweils geforderten Reinheit zu gewinnen.

Das bei der Gewinnung von Dimethylether oder wenigstens eines Oxygenats verwendete Synthesegas kann durch beliebige Verfahren erzeugt werden, die aus dem Stand der Technik bekannt sind (vgl. H. Hiller et al.: Gas Production. In: Ullmann's Encyclopedia of Industrial Chemistry, Onlineausgabe. Weinheim: Wiley-VCH, 2002. DOI: 10.1002/14356007.a12_169.pub2).

Die Erfindung kommt dabei bei Verfahren zur Erzeugung von Synthesegas zur Anwendung, bei denen Einsätze wie Erdgas, Naphtha, Vakuumrückstände aus Raffinerien, Kohle, feste oder flüssige Abfälle und/oder Biomasse, falls erforderlich vorbehandelt und/oder verdampft bzw. vergast, mit Prozessdampf vermischt und anschließend in wenigstens einem Reaktor (nachfolgend als Synthesegasreaktor bezeichnet) zumindest teilweise zu Synthesegas umgesetzt werden.

Zur Erzeugung von Synthesegas werden typischerweise ein- oder mehrstufige Verfahren eingesetzt. Hierbei kommen beispielsweise parallele Rohrreaktoren als Synthesegasreaktoren zum Einsatz, deren Reaktionsrohre herkömmlicherweise von außen befeuert und bei 830 bis 950 °C Reaktoraustrittstemperatur betrieben werden. Die Reaktionsrohre sind mit einem geeigneten Katalysator befüllt und werden von dem mit dem Prozessdampf vermischten Einsatz durchströmt. Die Erfindung kann neben der herkömmlichen Dampfreformierung (SMR, steam methane reforming) aber auch bei der autothermen Reformierung (ATR, autothermal reforming) und bei kombinierten Reformierungsverfahren aus herkömmlicher Dampfreformierung und authothermer Reformierung zum Einsatz kommen. Ein weiteres Einsatzgebiet der Erfindung sind Verfahren zur Dampfreformierung mit Kohlendioxidimport. Gegebenenfalls werden in solchen Verfahren, beispielsweise bei der autothermen Reformierung, andere Reaktortypen verwendet.

Dimethylether kann, wie eingangs bereits angesprochen, durch eine zweistufige Synthese aus Synthesegas über Methanol als Zwischenprodukt gewonnen werden. Entsprechende Verfahren sind beispielsweise ab Seite 171 im DME Handbook des Japan DME Forum, ISBN 978-4-9903839-0-9, 2007, beschrieben. Die zweistufige Gewinnung von Dimethylether aus Synthesegas zeichnet sich, wie erwähnt, dadurch aus, dass zunächst Methanol aus Synthesegas gewonnen wird, anschließend das nicht umgesetzte Synthesegas von den Kondensaten (Methanol und Wasser) weitestgehend abgetrennt wird, und das Methanol anschließend in einem weiteren Reaktor unter Gewinnung von Dimethylether und Wasser dehydratisiert wird.

In der Patentliteratur wird bereits 1973 (DE 23 62 944 A1, US 4 098 809 A) die direkte oder einstufige Gewinnung von Dimethylether aus Synthesegas beschrieben. Diese zeichnet sich durch eine gemeinsame Reaktionsstufe aus, in der aus Wasserstoff, Kohlenmonoxid und Kohlendioxid gemeinsam Methanol und Dimethylether gewonnen werden. Hierauf aufbauend wurden in der Literatur weitere Verfahren beschrieben.

In einem bekannten Kombinationsverfahren, dem sogenannten Topsoe-Prozess, wie er im DME Handbook ab Seite 185, insbesondere auf Seite 187 beschrieben ist, wird ein dualer Katalysator, mit dem sich sowohl Methanol als auch Dimethylether bilden lassen, eingesetzt. Es kommen mindestens zwei Reaktoren ohne zwischengeschaltete Auftrennung zum Einsatz, wobei ein erster Reaktor isotherm gekühlt und ein zweiter Reaktor adiabat betrieben wird. Es erfolgt eine parallele Produktion von Dimethylether und Methanol, wobei das Methanol in einem weiteren Reaktor nach Auftrennung der Komponenten zu Dimethylether umgesetzt werden kann.

Die Direktsynthese von Dimethylether kann auch beispielsweise im Slurrybetrieb und bei vergleichsweise geringen Stöchiometriezahlen erfolgen. Hierdurch kommt es zur Bildung von Kohlendioxid als Nebenprodukt, das von den jeweils nicht umgesetzten Verbindungen abgetrennt werden muss, um letztere als Recycle der Reaktion erneut zuführen zu können. Die genannten Reaktionen laufen nur bei niedrigem Kohlendioxidgehalt mit befriedigender Ausbeute ab.

Die Erfindung kann auch mit besonderem Vorteil bei von der Anmelderin entwickelten Verfahren und Vorrichtungen zur Gewinnung von Dimethylether zum Einsatz kommen, bei denen ein Einsatzstrom mit Wasserstoff, Kohlenmonoxid und Kohlendioxid entsprechend einer Stöchiometriezahl von mehr als zwei und einem vergleichsweise hohen Anteil an Kohlendioxid verwendet wird. Der oder die hierbei eingesetzten Reaktoren werden unter ausschließlich isothermen Bedingungen betrieben.

Den Verfahren zur Gewinnung von Dimethylether und anderer Oxygenate ist gemeinsam, dass diese mehr oder weniger stark exotherm ablaufen. Da die jeweils verwendeten Reaktionen vorteilhafterweise zumindest teilweise isotherm geführt werden sollten (siehe oben), ist eine entsprechende Wärmeabfuhr, beispielsweise unter Verwendung von Kühlwasser, erforderlich.

Zur Gewinnung von Dimethylether und anderer Oxygenate können typischerweise Rohrbündelreaktoren eingesetzt werden, deren mit Katalysator befüllte und von einem zumindest die Komponenten des eingesetzten Synthesegases enthaltenden Einsatzstrom durchströmte Reaktionsrohre von außen entsprechend gekühlt werden. Abweichend hierzu ist es jedoch beispielsweise auch möglich, das verwendete Kühlmedium durch die Rohre und den Einsatzstrom durch den außerhalb der Rohre befindlichen Raum (die sogenannte Shell) zu führen, wo dann auch der Katalysator bereitgestellt ist. Neben den erwähnten Rohrbündelreaktoren können grundsätzlich auch andere Reaktortypen, beispielsweise Plattenreaktoren oder gewickelte Reaktoren, zum Einsatz kommen.

In jedem Fall wird ein zumindest die Komponenten von Synthesegas enthaltender Einsatzstrom durch einen Reaktionsraum wenigstens eines Reaktors (nachfolgend als Oxygenatreaktor bezeichnet) geführt, der baulich von einem Kühlraum des wenigstens einen Oxygenatreaktors getrennt ist. Der Reaktionsraum kann dabei in eine Vielzahl von Teilräumen unterteilt sein, beispielsweise in die mit dem Katalysator befüllten Reaktionsrohre eines Rohrbündelreaktors, falls diese Anordnung verwendet wird (siehe oben), und/oder in die plattenförmigen Kammern eines Plattenreaktors. Entsprechendes gilt auch für den Kühlraum.

Der Kühlraum wird typischerweise von einem insbesondere wässrigen Kühlfluid durchströmt. Herkömmlicherweise handelt es sich hierbei um Kühlwasser, das in einem Kühlwasserkreislauf geführt wird. Bei dem Kühlwasser kann es sich beispielsweise auch um Kesselspeisewasser handeln, das zur Kühlung verdampft wird. Der im Synthesegasreaktor eingesetzte Dampf wird hingegen herkömmlicherweise als Prozessdampf in einem von dem Kühlwasserkreislauf getrennten Dampferzeugungssystem bereitgestellt.

### Vorteile der Erfindung

Die vorliegende Erfindung geht von einem Verfahren zur Gewinnung wenigstens eines Oxygenats aus, bei dem in wenigstens einem Synthesegasreaktor aus wenigstens einem Prozessdampfstrom und wenigstens einem kohlenwasserstoffhaltigen Strom wenigstens ein zumindest Wasser, Kohlenmonoxid und Wasserstoff enthaltender Rohgasstrom gebildet wird. Entsprechende Verfahren sind aus dem Stand der Technik grundsätzlich bekannt und wurden zuvor erläutert.

Der zumindest Wasser, Kohlenmonoxid und Wasserstoff enthaltende Rohgasstrom enthält mit Kohlenmonoxid und Wasserstoff zumindest die wichtigsten Komponenten von Synthesegas. Zusätzlich zu den aufgeführten Komponenten kann der Rohgasstrom beispielsweise Kohlendioxid und nicht umgesetzte Komponenten des wenigstens einen kohlenwasserstoffhaltigen Stroms enthalten. Diese müssen, je nach anschließender Verfahrensführung, nicht notwendigerweise alle aus dem Rohgasstrom abgetrennt werden. Beispielsweise wird, wie erwähnt, in einem von der Anmelderin entwickelten Verfahren zur Bildung von Dimethylether aus Synthesegas ein Synthesegas eingesetzt, welches vergleichsweise hohe Konzentrationen an Kohlendioxid enthält. Dies wird beispielsweise durch die Wahl eines geeigneten Katalysators und/oder die Verwendung neuer Reaktionswege ermöglicht.

Jedenfalls wird der Rohgasstrom, wie insoweit ebenfalls bekannt, auch im Rahmen des erfindungsgemäßen Verfahrens getrocknet. Wenigstens ein Teil des Wassers wird also aus dem wenigstens einen Rohgasstrom abgetrennt. Aus dem abgetrennten Wasser wird wenigstens ein Kondensatstrom gebildet und wie unten erläutert erfindungsgemäß verwendet. Weitere Komponenten des Rohgasstroms werden wenigstens teilweise in wenigstens einem Oxygenatreaktor zu wenigstens einem Rohproduktstrom umgesetzt, der das wenigstens eine erwünschte Oxygenat enthält. Die als Synthesegasreaktoren bzw. Oxygenatreaktoren geeigneten Reaktortypen wurden bereits erläutert.

Wie ebenfalls erwähnt, verlaufen die Reaktionen zur Bildung der Oxygenate typischerweise exotherm, so dass für eine isotherme Verfahrensführung der oder die verwendeten Oxygenatreaktoren gekühlt werden müssen. Erfindungsgemäß wird hierbei der wenigstens eine Oxygenatreaktor unter Verwendung wenigstens eines Teils des wenigstens einen Kondensatstroms, der aus dem wenigstens einen Rohgasstrom abgetrennt wurde, gekühlt. Der bei dieser Kühlung aus dem Wasser des wenigstens einen Kondensatstroms gebildete Dampf wird erfindungsgemäß ferner zumindest teilweise zur Bildung des wenigstens einen Prozessdampfstroms verwendet, also zusammen mit dem wenigstens einen kohlenwasserstoffhaltigen Strom dem wenigstens einen Synthesegasreaktor zugeführt.

Mit anderen Worten wird im Rahmen der vorliegenden Erfindung die in dem wenigstens einen Oxygenatreaktor freiwerdende Wärme zur Bildung von Prozessdampf verwendet, wobei der Prozessdampf aus Prozesskondensat aus dem vorgeschalteten Synthesegaserzeugungsprozess gebildet wird. Ein separater Kühlwasserkreislauf zur Kühlung des Oxygenatreaktors, beispielsweise eines Dimethyletherreaktors, ist nicht erforderlich. Somit kann im Rahmen der vorliegenden Erfindung auf ein zusätzliches Dampfsystem verzichtet werden. Ferner ermöglicht die vorliegende Erfindung die Einsparung einer sogenannten Process Condensate Recovery Unit (PCRU) bei der Erzeugung des Synthesegases bzw. die Verschmelzung dieser Unit mit dem Oxygenatreaktor.

Herkömmliche Verfahren erfordern mitunter einen beträchtlichen apparativen Aufwand, insbesondere wenn Exportdampf mit einer hohen Reinheit erzeugt werden soll. Ist eine Process Condensate Recovery Unit vorhanden, wird i.d.R. der Druck des sauberen Dampfes soweit angehoben, dass dieser zum Verdampfen des Prozesskondensats auf einem Druckniveau verwendet werden kann, das für die Synthesegaserzeugung geeignet ist. Muss nun der Oxygenatreaktor zusätzlich bei einem weiteren Dampf- bzw. Druckniveau gekühlt werden, wären hier insgesamt drei unterschiedliche Dampfniveaus bzw. Dampfsysteme erforderlich.

Im Rahmen der vorliegenden Erfindung wird ferner vorteilhafterweise wenigstens ein weiteres Dampfsystem verwendet, welches mit wenigstens einem Wasserstrom gespeist und wenigstens teilweise mit Abwärme aus dem wenigstens einen Synthesegasreaktor beheizt wird. In diesem weiteren Dampfsystem kann qualitativ hochwertiger Exportdampf erzeugt werden, der beispielsweise für die Verwendung in Turbinen geeignet ist. Der hier erzeugte Dampf kann auch zur Kompensation von Verlusten bzw. im Prozess umgesetztem Dampf in dem erläuterten Prozessdampfsystem (als sogenannter Makeupdampf) verwendet werden.

In dem weiteren Dampfsystem kann Druckdampf bereitgestellt werden, der an der Anlagengrenze abgegeben und beispielsweise zur Stromgewinnung verwendet werden kann. Grundsätzlich wäre es auch möglich, das mit dem wenigstens einen Wasserstrom gespeiste und dem wenigstens teilweise mit Abwärme aus dem wenigstens einen Synthesegasreaktor beheizte (weitere) Dampfsystem mit dem erfindungsgemäß vorgesehenen Dampfsystem zur Kühlung des Oxygenatreaktors zu koppeln. Ein derartiges Dampfsystem wäre jedoch auf den in dem wenigstens einen Oxygenatreaktor einsetzbaren Dampfdruck von typischerweise ca. 40 bar limitiert. Durch zusätzliche Druckverluste durch Rohrleitungsführungen, Dampfüberhitzung, Ventile usw. würde der mögliche Dampfabgabedruck an der Anlagengrenze weiter sinken. Zwar könnte derartiger Dampf auch bei geringerem Druck grundsätzlich noch zur Energiegewinnung eingesetzt werden, beispielsweise in Kondensationsturbinen, jedoch reichen Qualität und/oder Überhitzung hierzu typischerweise nicht mehr aus. Eine wirtschaftliche Stromerzeugung ist damit nicht möglich. Eine derartige Lösung kann aber immer dann zum Einsatz kommen, wenn der erforderliche Dampfdruck an der Anlagengrenze entsprechend gering und die geforderte Dampfqualität ausreichend sind. Sind höhere Dampfdrücke und hohe Dampfqualitäten erforderlich, werden die beiden erläuterten Dampfsysteme vorteilhafterweise separat ausgeführt.

Das wenigstens eine weitere Dampfsystem kann vorteilhafterweise auch einen Wasser- oder Dampfstrom bereitstellen, der mit dem wenigstens einen Kondensatstrom aus dem wenigstens einen Rohgasstrom vereinigt werden kann.

Zur Aufbereitung des wenigstens einen Kondensatstroms sind ferner im Rahmen der vorliegenden Erfindung geeignete Mittel vorgesehen, beispielsweise zu dessen Entlüftung, Druckbeaufschlagung und/oder Erwärmung. Die Druckerhöhung erfolgt beispielsweise auf einen Druck von ca. 40 bar oder mehr, entsprechend dem in dem wenigstens einen Oxygenatreaktor zur Kühlung benötigten Dampfniveau. Soll der Dampf beispielsweise bei einem Druck von ca. 40 bar im Oxygenatreaktor zur Kühlung genutzt werden, ist es vorteilhaft, die vorgeschaltete Druckbeaufschlagung auf ca. 50 bar zu erhöhen, um unvermeidliche Druckverluste durch Regler, Leitungen, Wärmetauscher, statische Höhen usw. auszugleichen.

Da in dem wenigstens einen Oxygenatreaktor keine Überhitzung des Dampfs erfolgt, wird der bei der Kühlung des wenigstens einen Oxygenatreaktors aus dem Wasser des wenigstens einen Kondensatstroms gebildete Dampf mittels Abwärme, günstigerweise Abwärme des wenigstens einen Synthesegasreaktors, überhitzt. Alternativ kann in diesem Zusammenhang auch überhitzter Dampf aus dem weiteren Dampfsystem zugegeben werden.

Die vorliegende Erfindung kommt insbesondere in einem Verfahren zum Einsatz, bei dem der wenigstens eine verwendete Synthesegasreaktor zur Durchführung eines Dampfreformierungsverfahrens, eines autothermen Reformierungsverfahrens, eines kombinierten Verfahrens aus einem Dampfreformierungsverfahren und einem autothermen Reformierungsverfahren und/oder einem Dampfreformierungsverfahren mit Kohlendioxidimport erfolgt, wie zuvor erläutert.

Die vorliegende Erfindung eignet sich insbesondere zur Gewinnung von Dimethylether, jedoch auch beispielsweise zur Gewinnung von Methanol und anderen Oxygenaten wie eingangs erwähnt, insbesondere von Alkoholen, Ethern und Mischungen dieser.

Eine Anlage zur Gewinnung wenigstens eines Oxygenats ist ebenfalls Gegenstand der vorliegenden Erfindung. Eine derartige Anlage weist wenigstens einen Synthesegasreaktor auf, der zur Bildung wenigstens eines zumindest Wasser, Kohlenmonoxid und Wasserstoff enthaltenden Rohgasstroms aus wenigstens einem Prozessdampfstrom und wenigstens einem kohlenwasserstoffhaltigen Strom eingerichtet ist. Es sind Mittel vorgesehen, die dafür eingerichtet sind, aus wenigstens einem Teil des Wassers des wenigstens einen Rohgasstroms wenigstens einen Kondensatstrom zu bilden und weitere Komponenten des Rohgasstroms wenigstens teilweise in wenigstens einem Oxygenatreaktor zu wenigstens einem Rohproduktstrom umzusetzen, der das wenigstens eine Oxygenat enthält.

Die Anlage zeichnet sich durch Mittel aus, die dafür eingerichtet sind, den wenigstens einen Oxygenatreaktor unter Verwendung wenigstens eines Teils des wenigstens einen Kondensatstroms zu kühlen und bei der Kühlung des wenigstens einen Oxygenatreaktors aus dem Wasser des wenigstens einen Kondensatstroms gebildeten Dampf zumindest teilweise zur Bildung des wenigstens einen Prozessdampfstroms zu verwenden.

Insbesondere ist eine derartige Anlage zur Durchführung eines zuvor erläuterten Verfahrens eingerichtet und profitiert von den bereits erwähnten Vorteilen.

### Kurze Beschreibung der Zeichnungen

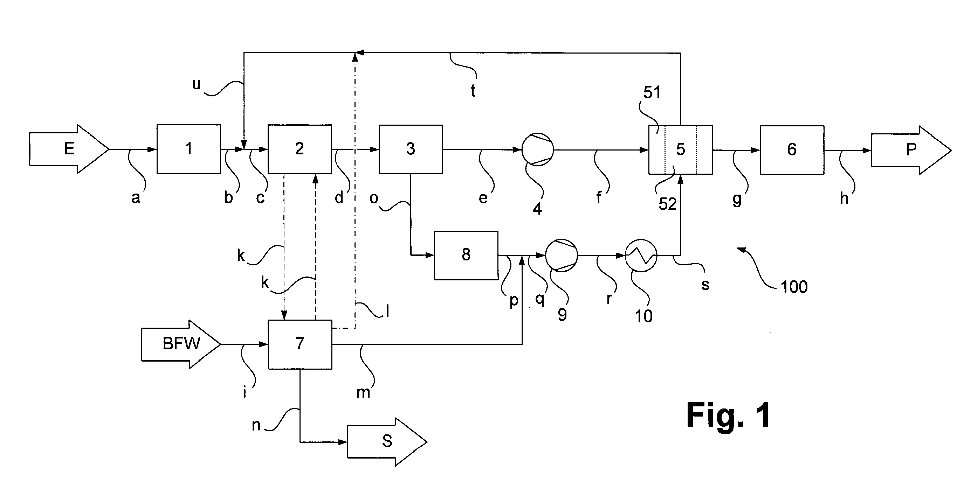

Figur 1 veranschaulicht ein Verfahren gemäß einer Ausführungsform der Erfindung.

### Ausführungsformen der Erfindung

In Figur 1 ist ein Verfahren zur Gewinnung wenigstens eines Oxygenats gemäß einer Ausführungsform der Erfindung in Form eines schematischen Ablaufplans, der zugleich ein Anlagenschema einer hierzu verwendeten Anlage 100 darstellt, veranschaulicht.

Insgesamt wird in der Anlage 100 aus einem kohlenwasserstoffhaltigen Einsatz E, der der Anlage als Einsatzstrom a zugeführt wird, ein oxygenatreiches Produkt P gewonnen und in Form eines Produktstroms h entnommen. Wie erläutert, kann es sich bei der Anlage 100 insbesondere um eine Anlage zur Gewinnung von Dimethylether handeln, jedoch auch beispielsweise um eine Anlage 100 zur Gewinnung eines Gemischs aus Dimethylether und Methanol und/oder um eine Anlage 100 zur Gewinnung wenigstens eines anderen Oxygenats, wie eingangs erläutert.

Der Einsatzstrom a wird in der Anlage 100 einem Vorbehandlungsschritt 1 unterworfen, welcher je nach dem verwendeten Einsatz ausgewählt wird. Vorbehandlungsschritte 1 können beispielsweise eine Verdampfung, eine Vergasung und/oder eine Aufreinigung (z.B. Entschwefelung) eines entsprechenden Einsatzstroms a umfassen.

Nach der Vorbehandlung in dem Vorbehandlungsschritt 1 liegt der Einsatzstrom a in entsprechend vorbehandelter Form vor. Er ist nun mit b bezeichnet. Der Strom b wird nun mit einem Dampfstrom u vereinigt und in Form eines Reaktionsgemischs als Strom c in wenigstens einen Synthesegasreaktor 2 eingespeist. Wie ebenfalls eingangs erläutert, handelt es sich bei einem derartigen Synthesegasreaktor 2 beispielsweise um einen zur Dampfreformierung des Stroms c eingerichteten Reaktor. Bei einem zur autothermen Reformierung verwendeten Reaktor wird auch Sauerstoff zugegeben.

Dem Synthesegasreaktor 2 wird ein Rohgasstrom d entnommen, welcher anschließend zumindest teilweise wenigstens einem Nachbehandlungsschritt 3 unterworfen wird. Der wenigstens eine Nachbehandlungsschritt 3 umfasst zumindest eine Kühlung des Rohgasstroms d. Bei der Kühlung des Rohgasstroms d fällt ein wasserreiches Prozesskondensat an, das als Strom o abgezogen wird.

Der in dem wenigstens einen Nachbehandlungsschritt 3 behandelte und dabei zumindest gekühlte Rohgasstrom d, der nun als Synthesegas enthaltender Strom e vorliegt, wird in einem oder mehreren Verdichtern 4 verdichtet und anschließend als verdichteter Strom f in einen oder mehrere Oxygenatreaktoren 5 eingespeist. Der oder die Oxygenatreaktoren 5 weisen dabei, hier stark schematisiert veranschaulicht, wenigstens einen Reaktionsraum 51 und wenigstens einen Kühlraum 52 auf. Wird beispielsweise ein Rohrbündelreaktor als Oxygenatreaktor 5 verwendet, handelt es sich bei dem Reaktionsraum 51 um die Innenräume der Reaktionsrohre, die von dem Strom f durchströmt werden, der Reaktionsraum 52 setzt sich also aus mehreren Teilräumen zusammen. Entsprechendes gilt für andere Reaktortypen, beispielsweise Plattenreaktoren oder gewickelte Isothermreaktoren. In entsprechender Weise bildet der die Reaktionsräume umgebende Raum, der in einem Rohrbündelreaktor von zur Kühlung verdampfendem Kühlwasser, beispielsweise auch Kesselspeisewasser, durchströmt wird, den Kühlraum 52. (Eine alternative Anordnung wurde zuvor erläutert, die Erläuterungen gelten dort vice versa.) Auch der Kühlraum 52 kann aus mehreren Teilräumen zusammengesetzt sein. Er wird im dargestellten Beispiel von einem wässrigen Kühlfluid in Form des Stroms s durchströmt.

Dem oder den Oxygenatreaktoren 5 wird ein Rohproduktstrom g entnommen und zumindest teilweise wenigstens einem Produktaufbereitungsschritt 6 zugeführt. In dem wenigstens einen Produktaufbereitungsschritt 6 wird der Rohproduktstrom g beispielsweise zunächst abgekühlt und anschließend in seine Komponenten aufgetrennt. Handelt es sich bei dem Oxygenatreaktor 5 beispielsweise um einen Dimethyletherreaktor, erfolgt in der Produktaufbereitungsstufe 6 eine Abtrennung eines dimethyletherreichen Stroms.

In jedem Fall wird in dem wenigstens einen Produktaufbereitungsschritt 6 zumindest ein Produktstrom h gewonnen und als Produkt P aus der Anlage 100 ausgeführt.

Wie zuvor erwähnt, wird in herkömmlichen Anlagen zur Gewinnung wenigstens eines Oxygenats in einem Oxygenatreaktor 5 zur Kühlung verdampfendes Kühlwasser aus einem Kühlwasserkreislauf, beispielsweise auch Kesselspeisewasser, verwendet. Dieser Kühlwasserkreislauf kann mit Prozesskondensat gespeist werden, das in wenigstens einem Nachbehandlungsschritt 3 bzw. einer Kühleinrichtung für einen Synthesegasstrom d zur Bildung des Stroms c anfällt. Jedoch wird der Prozessdampfstrom u herkömmlicherweise einer separat hierzu vorgesehenen Dampferzeugungseinheit entnommen.

Im Gegensatz dazu sieht die vorliegende Erfindung vor, ein gemeinsames Dampfsystem zur Kühlung des oder der Oxygenatreaktoren 5 einerseits und zur Deckung des Dampfbedarfs in dem oder den Synthesegasreaktoren 2 mit Prozessdampf in Form des Stroms u andererseits vorzusehen.

Dieser Aspekt der Erfindung umfasst beispielsweise, dass Prozesskondensat in Form des Stroms o zunächst einer Entlüftungseinrichtung 8 zuzuführen. Ein entsprechend entlüfteter Strom, nun mit p bezeichnet kann als Strom q einer Verdichtungsstufe 9 zugeführt werden und wird anschließend mit frischem Dampf oder Wasser in Form des Stroms m (siehe unten) vermischt oder umgekehrt. Anschließend wird der Strom, nun mit r bezeichnet, in einem Wärmetauscher 10 vorgewärmt. Der Wärmetauscher 10 kann mit einem geeigneten Wärmemedium betrieben werden (nicht veranschaulicht). Der vorgewärmte Strom s wird, wie erläutert, zur Kühlung des oder der Oxygenatreaktoren 5 verwendet und durch dessen Kühlraum bzw. Kühlräume geführt.

Hierbei kann ein i.d.R. gesättigter Dampfstrom t erhalten werden. Der Dampfstrom t kann alternativ auch in einem Wärmetauscher überhitzt werden oder als gesättigter Strom mit Einsatzstoff gemischt werden. Zum Ausgleich von Dampfverlusten und/oder zur Überhitzung ist es möglich, den Dampfstrom t mit einem Makeupdampfstrom I (siehe unten) zu vereinigen und als Strom u zu dem Strom b zuzuspeisen. Der Dampfstrom t muss nicht vollständig dem Strom b zugespeist und damit dem Synthesegasreaktor 2 zugeführt werden. Ein Teil kann beispielsweise zur Wärmeintegration mit anderen Anlagenteilen verwendet werden.

Ein wesentlicher Aspekt der vorliegenden Erfindung besteht damit darin, Prozesskondensat, das hier in Form des Stroms o bei der Kühlung eines Synthesegasstroms d anfällt, zunächst zur Kühlung in dem oder den Oxygenatreaktoren 5 einzusetzen und anschließend auf diese Weise gebildeten Dampf in dem Dampfstrom u dem Einsatz in den oder die Synthesegasreaktoren zuzuspeisen. Anstelle von herkömmlicherweise zwei Wasser- bzw. Dampfkreisläufen zur Kühlung des oder der Oxygenatreaktoren 5 einerseits und zur Bereitstellung von Prozessdampf andererseits wird im Rahmen der vorliegenden Erfindung also nur ein gemeinsames Dampfsystem benötigt. Hierdurch werden die bereits zuvor mehrfach erwähnten Vorteile erzielt.

In einem weiteren Dampfsystem 7 kann Kesselspeisewasser BFW, das von anlagenextern bereitgestellt wird, in Form eines Stroms i eingesetzt werden. Das Dampfsystem 7 kann zumindest teilweise, wie hier in Form der gestrichelten Pfeile k veranschaulicht, durch Abwärme des oder der Synthesegasreaktoren 2 betrieben werden. In dem Dampfsystem 7 kann auch, wie hier in Form eines strichpunktiert dargestellten Stroms I veranschaulicht, überhitzter Dampf erzeugt und wie bereits erläutert verwendet werden.

In dem Dampfsystem 7 erhitztes Kesselspeisewasser oder Dampf kann als Strom m aus dem Dampfsystem 7 ausgeführt und wie zuvor erläutert verwendet werden. Ein weiterer Strom n (Druckdampf) kann dem Dampfsystem 7 entnommen und als Exportdampf S bereitgestellt werden.

## Patentansprüche

1. Verfahren zur Gewinnung wenigstens eines Oxygenats, bei dem in wenigstens einem Synthesegasreaktor (2) aus wenigstens einem Prozessdampfstrom (u) und wenigstens einem kohlenwasserstoffhaltigen Strom (b) wenigstens ein zumindest Wasser, Kohlenmonoxid und Wasserstoff enthaltender Rohgasstrom (d) gebildet wird, wobei aus wenigstens einem Teil des Wassers in dem wenigstens einen Rohgasstrom (d) wenigstens ein Kondensatstrom (o) gebildet wird und weitere Komponenten des Rohgasstroms (d) wenigstens teilweise in wenigstens einem Oxygenatreaktor (5) zu wenigstens einem Rohproduktstrom (g) umgesetzt werden, der das wenigstens eine Oxygenat enthält, **dadurch gekennzeichnet, dass** der wenigstens eine Oxygenatreaktor (5) unter Verwendung wenigstens eines Teils des wenigstens einen Kondensatstroms (o) gekühlt wird und bei der Kühlung des wenigstens einen Oxygenatreaktors (5) aus dem Wasser des wenigstens einen Kondensatstroms (o) gebildeter Dampf zumindest teilweise zur Bildung des wenigstens einen Prozessdampfstroms (u) verwendet wird.

2. Verfahren nach Anspruch 1, bei dem zur Bildung des wenigstens einen Prozessdampfstroms (u) ferner wenigstens ein Dampfstrom (I) aus wenigstens einem weiteren Dampfsystem (7) verwendet wird, welches mit wenigstens einem Wasserstrom (i) gespeist und wenigstens teilweise mit Abwärme aus dem wenigstens einen Synthesegasreaktor (2) beheizt wird.

3. Verfahren nach Anspruch 2, bei dem der wenigstens eine Kondensatstrom (o) vor der Kühlung des wenigstens einen Oxygenatreaktors (5) mit wenigstens einem Wasser- und/oder Dampfstrom (m) aus dem wenigstens einen weiteren Dampfsystem (7) vereinigt wird.

4. Verfahren nach einem der vorstehenden Ansprüche, bei dem der wenigstens eine Kondensatstrom (o) vor der Kühlung des wenigstens einen Oxygenatreaktors (5) entgast, druckerhöht und/oder gekühlt wird.

5. Verfahren nach einem der vorstehenden Ansprüche, bei dem der bei der Kühlung des wenigstens einen Oxygenatreaktors (5) aus dem Wasser des wenigstens einen Kondensatstroms (o) gebildete Dampf mittels Abwärme und/oder durch Mischen mit überhitztem Dampf überhitzt wird.

6. Verfahren nach einem der vorstehenden Ansprüche, bei dem der wenigstens eine Synthesegasreaktor (2) zur Durchführung eines Dampfreformierungsverfahrens, eines autothermen Reformierungsverfahrens, eines kombinierten Verfahrens aus einem Dampfreformierungsverfahren und einem autothermen Reformierungsverfahren und/oder eines Dampfreformierungsverfahrens mit Kohlendioxidimport verwendet wird.

7. Verfahren nach einem der vorstehenden Ansprüche, bei dem Dimethylether, Methanol und/oder wenigstens ein anderes Oxygenat, insbesondere wenigstens ein Alkohol und/oder wenigstens ein Ether und/oder eine Mischung der genannten Verbindungen gewonnen wird.

8. Anlage (100) zur Gewinnung wenigstens eines Oxygenats, mit wenigstens einem Synthesegasreaktor (2), der zur Bildung wenigstens eines zumindest Wasser, Kohlenmonoxid und Wasserstoff enthaltenden Rohgasstroms (d) aus wenigstens einem Prozessdampfstrom (u) und wenigstens einem kohlenwasserstoffhaltigen Strom (b) eingerichtet ist, wobei Mittel vorgesehen sind, die dafür eingerichtet sind, aus wenigstens einem Teil des Wassers des wenigstens einen Rohgasstroms (d) wenigstens einen Kondensatstrom (o) zu bilden und weitere Komponenten des Rohgasstroms (d) wenigstens teilweise in wenigstens einem Oxygenatreaktor (5) zu wenigstens einem Rohproduktstrom (g) umzusetzen, der das wenigstens eine Oxygenat enthält, **gekennzeichnet durch** Mittel, die dafür eingerichtet sind, den wenigstens einen Oxygenatreaktor (5) unter Verwendung wenigstens eines Teils des wenigstens einen Kondensatstroms (o) zu kühlen und bei der Kühlung des wenigstens einen Oxygenatreaktors (5) aus dem Wasser des wenigstens einen Kondensatstroms (o) gebildeten Dampf zumindest teilweise zur Bildung des wenigstens einen Prozessdampfstroms (u) zu verwenden.

9. Anlage (100) nach Anspruch 8, die zur Durchführung eines Verfahrens nach einem der Ansprüche 1 bis 7 eingerichtet ist.
